(19) Europäisches Patentamt / European Patent Office / Office européen des brevets

(11) **EP 2 850 034 B1**

(12) **EUROPEAN PATENT SPECIFICATION**

(45) Date of publication and mention of the grant of the patent:
**26.07.2017 Bulletin 2017/30**

(51) Int Cl.:
*C02F 1/42* $^{(2006.01)}$       *B01J 41/04* $^{(2017.01)}$
*B01J 49/00* $^{(2017.01)}$       *B01J 47/10* $^{(2017.01)}$
*C02F 101/30* $^{(2006.01)}$

(21) Application number: **13724904.1**

(22) Date of filing: **14.05.2013**

(86) International application number:
**PCT/NL2013/050359**

(87) International publication number:
**WO 2013/172710 (21.11.2013 Gazette 2013/47)**

(54) **ION EXCHANGE PROCESS WITH PLUG FLOW CONDITIONS AND SHORT RESIDENCE TIMES**

IONENAUSTAUSCHVERFAHREN MIT PFROPFENSTRÖMUNGSBEDINGUNGEN UND KURZEN VERWEILZEITEN

PROCÉDÉ D'ÉCHANGE D'IONS AVEC DES CONDITIONS D'ÉCOULEMENT EN PISTON ET DE COURTS TEMPS DE SÉJOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2012 NL 2008808**

(43) Date of publication of application:
**25.03.2015 Bulletin 2015/13**

(73) Proprietor: **N.V. PWN Waterleidingbedrijf Noord-Holland
1991 AS Velserbroek (NL)**

(72) Inventors:
 • **GALJAARD, Gilbert**
 **NL-1359 HV Almere (NL)**
 • **KAMP, Peer**
 **NL-1934 PW Egmond aan de Hoef (NL)**

(74) Representative: **Nederlandsch Octrooibureau
P.O. Box 29720
2502 LS The Hague (NL)**

(56) References cited:
**WO-A1-2005/094994      GB-A- 1 436 547
US-A1- 2005 173 348      US-A1- 2008 021 124**

 • **Marin Slunjski, Keith Cadee, John Tattersall: "MIEX® RESIN WATER TREATMENT PROCESS", , 4 November 2006 (2006-11-04), pages 1-10, XP002684314, Retrieved from the Internet: URL:http://www.miexresin.com/files/publish edpapers/aquatechnl2000.pdf [retrieved on 2012-09-28]**
 • **CORNELISSEN E R ET AL: "Effect of anionic fluidized ion exchange (FIX) pre-treatment on nanofiltration (NF) membrane fouling", WATER RESEARCH, ELSEVIER, AMSTERDAM, NL, vol. 44, no. 10, 1 May 2010 (2010-05-01), pages 3283-3293, XP027036722, ISSN: 0043-1354 [retrieved on 2010-03-15] cited in the application**
 • **CORNELISSEN E R ET AL: "Fluidized ion exchange (FIX) to control NOM fouling in ultrafiltration", DESALINATION, ELSEVIER, AMSTERDAM, NL, vol. 236, no. 1-3, 31 January 2009 (2009-01-31), pages 334-341, XP025839593, ISSN: 0011-9164, DOI: 10.1016/J.DESAL.2007.10.084 [retrieved on 2008-12-24] cited in the application**
 • **ZHANG R ET AL: "Fluidized bed magnetic ion exchange (MIEX(R)) as pre-treatment process for a submerged membrane reactor in wastewater treatment and reuse", DESALINATION, ELSEVIER, AMSTERDAM, NL, vol. 227, no. 1-3, 30 July 2008 (2008-07-30), pages 85-93, XP022622498, ISSN: 0011-9164, DOI: 10.1016/J.DESAL.2007.05.037 [retrieved on 2008-04-24]**

## Description

### Field of the invention

The invention relates to a method of removing dissolved organic carbons from raw water, containing suspended and/or colloidal matter in a suspended ion exchange process.

### Background of the invention

There is a world wide need to treat liquids containing suspended and colloidal matter, in particular raw surface water, with ion exchange resins. This is not feasible with standard state of the art ion exchange methods for treating surface water in large scale drinking water applications. The fixed beds that are commonly used will foul up quickly with the suspended matter and the fixed ion exchange bed starts to function as a filtration bed instead as an adsorption media and current suspended ion exchange methods suffer from "resin blinding" by biofilms that are formed around the resin beads.

Currently suspended ion exchange methods are based on fluidised bed reactors or on totally mixed reactors with very high concentrations of resin (>400 mL/L). The resin has the form of small beads with a diameter of about 0,1 - 3mm. Both technologies have not been used on a larger scale so far (not more thatn 4-5 plants world wide) due to problems caused in the pilot phase by resin blinding. One of the reasons of resin blinding is the fact that these technologies treat large volumes of raw water per volume of resin and treat for instance over 1000 volumes of water per volume of resin until the moment the resin bed is regenerated. Regeneration of the resin is carried out by contacting the resin with a salt solution.

In for instance in the MIEX® -process, (an acronym for Magnetic Ion Exchange, manufactured and commercialised by Orica), only a relatively small part of the resin (5%-10%) is continuously taken out of the reactor, is regenerated and is there after dosed back. Also in these MIEX® processes the bed volumes of water treated until regeneration are designed to be as high as possible with the purpose of removing as much of the pollutants as possible before regeneration in order to lower the salt consumption required for regeneration. This has a few disadvantages making it less attractive or even imposslible to use (i.e. more expensive). Such a process sometimes, in the case of anion ion exchange resins that are suitable for removing dissolved organic carbon (DOC) in raw surface waters, is not even feasible. This is caused by the fact that these waters besides a carbon source, often also contain phosphates, which together with the porous resin beads, at the large detentions times, create the perfect environment for bacteria to grow on since the resin is now a source for C and P for bacteria. This leads to the formation of bio films, which tend to blind the active groups of the resin. This process is generally referred to as "resin blinding". Resin blinding occurs slowly but can lead to serious problems. Besides loosing adsorption capacity [Wachinski, 2006], leading to even higher resin concentration or lowering the contact time [Verdickt, 2011; Cornelissen 2009] (therefore loosing flow capacity), the biofilm itself start to release organic matter or adenosinetriphosphate (ATP) that can harm downstream processes [Cornelissen, 2010].

To overcome this resin blinding phenomena, state of the art ion exchange fixed bed reactors are every now and then flushed with a high pH solution to kill and dissolve the bio film as well as possible. However these beds, like mentioned before, can not treat solutions with suspended matter. In the case of the MIEX® processes the used hydrophobic resin is not resistant against high concentrations of hydroxide (OH). At high pH's the resin falls apart shortening the lifetime of this relatively expensive resin significantly. Besides that the process itself makes it impossible to distinguish which part of the resin has been regenerated the last time and determining the residence time of the resin takes long and may even not be possible to determine residence times.

Same phenomena happens in fluidised bed reactors like the FIX-process. The authors and the inventors of this process [Cornelissen 2010] even presents and writes about the biofilm problems they encounter using this process.The FIX process besides a pilot has never been built on a large scale anywhere in the world.

References

- Cornelissen, E.R., D. Chasseriaud, W.G. Siegers, E.F. Beerendonk, D. van der Kooij (2010), "Effect of anionic fluidized ionexchange (FIX) pre-treatment on nanofiltration (NF) membrane fouling", Water Research 44 3283- 3293, Elsevier
- Cornelissen E.R., E.F Beerendonk, M.N. Nederlof, J.P van der Hoek, L.P. Wessels (2009) "Fluidised ion exchange (FIX) to control NOM-fouling in Ultrafiltartion, Desalination 236, 334-341 Elsevier
- Wachiniski, A. M. (2006). Ion Exchange: Treatment for Water. Denver CO, American Water Works Association.

US2005/0173348 discloses a continuous selective ion exchange process, which may be used for purifying contaminated water, in which preferential removal of the more concentrated ion species can be accomplished by reducing the contact time, increasing the emedia-to-ion stoichiometric ratio and controlling the degree of mixing of fresh or partially loaded ion exchange media and the ion bearing solution. In one embodiment, feed solution is directly mixed with regenrated and/or fresh ion exchange media to form a reactant slurry and ion exchange reactions occur in the media transport line that discharges product slurry in the media sepator. The known process does not disclose residence times of the ion exchange media and the treated solution in the transport line and may lead to resin blinding in case the treated solution contains dissolved organic carbon (DOC). As the residenc times of the ion exchange media vary in the reactor, control of the regeneration process is relatively inaccurate.

In GB 1 436 547 an ion exchange process is disclosed for removing dissolved material from liquid media. Ion exchange material is mixed with effluent and is agitated for instance by establishing a flowing turbulent stream of admixed liquid and ion exchange material, which is pereferably wholly spent after a single pass after a residence time of between 2 and 60 minutes. The known process is used for treating small amounts of proteinaceous effluent using high concentrations of cellulosic ion exchange resin but is unsuitable for efficiently treating large volumes of raw surface water containing dissolved organic carbons.

## Object of the invention

It is an object of the present invention to provide a method of treating raw surface water containing suspended and or colloidal matter, in particular raw surface water, using an ion exchange resin, which method reduces the problem of resin blinding and is technically and economically feasible. The method according to the invention should be able to treat large volumes of water in a relatively short time. It is a further object of the invention to provide a method of treating raw surface water providing accurate control of the adsorption process. The invention aims at providing a method using a compact equipment, using the resin in an efficient and effective manner. It is a further object of the present invention to provide a method using reduced amounts of regenerant salt and providing an effluent of constant and high quality.

## Summary of the invention

Hereto a method of treating water containing suspended and/or colloidal matter in a suspended ion exchange process, according to claim 1 comprises the steps of:

- feeding the water into a plug flow reactor at a rate of at least $500m^3/h$ preferably at least $1000m^3/h$,
- adding an anion exchange material to the liquid at the inlet of the reactor,
- suspending the anion exchange material in the water,
- transporting the water and the suspended anion exchange material under plug flow conditions to an outlet of the reactor after a predetermined residence time,
- feeding the water and the suspended anion exchange material to a separator and
- feeding treated water and anion exchange material from a reactor outlet to a separator, wherein
- the concentration of the anion exchange material in the reactor is smaller than than 20 ml/l, and
- the residence time of the anion exchange material in the reactor is lower than 30 minutes.

Surprisingly it was found that by using relatively low concentrations of resin during relatively short contact times with the treated solution before regenerating all of the resin, it was possible to use the resin at maximum adsorption capacity and adsorption rate, resulting in a very effective removal of suspended and/or colloidal matter. The short contact times of the resin with the treated solution prior to regeneration of the resin strongly reduce or prevent the formation of bio films on the resin which has not been possible with the ion exchange porcesses known in the art for liquids containing supended matter. Large volumes of surface water can be effectively treated with the method according to the invention.

In the method according to the invention, resin is dosed from a dosing tank into the solution, which may comprise raw surface water, leading to a low resin concentration of between 4-20 mL resin/L depending on the raw solution quality, desired quality and resin type. This mixture is then led to plug flow contactors. With "plug flow" as used herein is meant that the resin moves through the contactors with the same, uniform speed as the treated liquid. In these contactors, the resin has the same residence time as the treated liquid. In the plug flow ion exchange process of the present invention, the resin travels (in contrast to the known MIEX® " high rate" processes wherein the resin remains contained within the contactors), together with the liquid to be treated (e.g. raw water) through these contactors. The amount, shape and design of the contactors play an important role in the adsorption kinetics of this process, which contactors according to the invention are preferably designed so as to approach as much as possible the ideal contactor system of a plug-flow reactor that is described in: Ramaswamy H.S., Abdelrahim K.A., Simpson B.K., Smith J.P. (1995). "Residence time distribution (RTD) in aseptic processing of particulate foods: a review". Food Research International, 28 (3), 291-310.

This leads to shorter residence times of the resin and therefore shorter contact times.

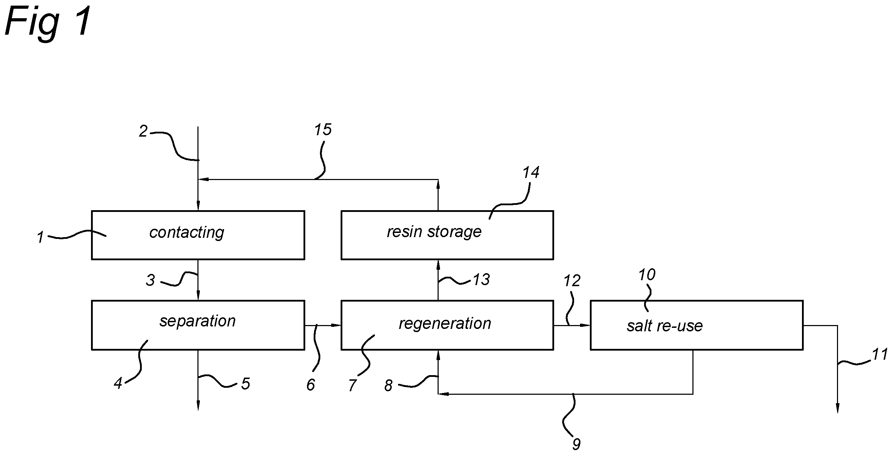

After leaving the contactors, the resin can be separated from the treated liquid, using a customized lamella settler, immediately regenerated and returned to the dosing tank making the resin loop complete. A single pass of the resin provides a preferred embodiment of the method according to the invention. A schematic lay-out of the process of the invention is given in figure 1. Because of the plug-flow conditions according to the invention, the exact residence time of the resin is known. This makes it possible to regenerate all of the resin equally, leading to the same very low bed volumes of treated liquid for all of the resin. The effluent composition of the treated liquid does not depend on the number of bed volumes of liquid that have been treated with the resin.

The relatively short contact time of below a few hours, preferably in the range of 10 min < t < 30 min, of the treated liquid with the resin before regeneration makes it hard and almost impossible for bacteria to grow on the resin. This overcomes the problem of resin blinding and ensures that the resin operates under stable adsorption kinetics.

The use of plug flow conditions in combination with the low resin concentrations and short residence times according to the invention, allow accurate modelling of the resin residence time and of the adsorption process, making it possible to design reliable installations based on only a few jar tests for any commercially available resin.

The use of a plug flow contactor in combination with the low concentrations of resin, results in the footprint of the contactor and regenerator vessel to be relatively small compared to the MIEX-process (for instance by a factor of 2-5). The small amounts of resin used in the process result in a low inventory of resin compared to the MIEX-process (for instance by a factor of 5-25) and low amounts of regenerating salts being required.

In the method of claim 1 the separated ion exchange material is fed from the reactor to a regeneration vessel after passing no more than 2 two times, most preferably no more than 1 time. By passing the resin a reduced number of cycles through the reactor, preferably in a single pass, before regeneration, the resin is used at maximum adsorption capacity, resulting in very good treatment (water purification) performance.

For regeneration of the resin, for instance a brine (NaCl) solution is used in the regenerator vessel, at relatively low concentrations of 1-70g/L, (in contrast to known ion exchange technologies using 90-320 mg/L) depending on the used resin and organic load. This is mainly caused by the fact that the resin is not loaded leading to a lower need of salt concentrations to reverse the equilibrium reactions. In the regeneration method of the invention, the concentration of the regenerating substance and the residence time of the resin in the regenerator vessel are substantially constant such that the degree of regeneration of the resin that is fed from the regenerator is substantially constant.

The regeneration and rinsing of the resin is done with the resin in the most compact form in a so called 'fixed bed' or column, lowering the total bed volume of the resin. The regeneration and rinsing fluid are pumped over this bed in an ideal plug flow, limiting blending with the suppressed fluid. The fluids move as a front through the resin bed in down flow. This automatically leads to a so called 'counter current' regeneration (resin is first in contact with an increased concentration of the desorbed ions lowering this concentration over time and therefore increasing the concentration of the ion to be adsorbed during regeneration).

The counter current regeneration by plug flow through the fixed bed is further enhanced by switching physically to different regeneration fluids, stored in different vessels, after suppressing X bed volume (< 0,5 BV). These fluids differ in concentration of the desorbed matter, going down in concentration in order of usage and ending in a solution containing no desorbed matter. The amount of different solutions must have a minimum of 3.

The used regeneration fluid coming out of the vessel is re-used and send back to the designated vessel containing the right amount of desorbed matter. In practice this means that as soon as the influent regeneration fluid changes the effluent catchment vessel of the regeneration fluid also changes.

The exact regeneration volume and flow per vessel is monitored, controlled and adjustable leading to controllable bed volumes, contact times and refreshment rates of the film layer around the resin. Before the used regeneration fluid is stored in the designated vessel for re-use the concentration of the to be adsorbed ion during regeneration is restored by adding this in concentrated form (bulk solution) to the stream before it enters the storage vessel.

The first so called 'pulse' in ion concentration that comes out of the resin bed during the start of the regeneration, is monitored. The first flow out of the bed is divided in 3 parts: a) concentration low, the fluid can be add to the production flow b) concentration high and dirty, the fluid will be send to waste c) concentration high and re-usable, the fluid will be send back to the first regeneration storage vessel.

Next to the quality monitor, volume will be used as an indication when to switch from production to waste to re-use of regeneration fluid. After the cleanest regeneration fluid has been used the cycle is finished by immediate rinsing of the resin with a special rinsing solution to eliminate the high concentration of to be adsorbed ions during regeneration around and in the resin before the resin is re-used.

The rinsing solution is stored in a separate tank and contains processed solution with a slightly increased concentration of regeneration ions. Rinsing of the regenerated resin takes place until the effluent coming out of the resin bed is low enough in concentration (similar to the concentration of the rinsing fluid). This so called 'tail' (starts with a high concentration and goes down to the initial rinse solution concentration) is monitored and is divided in 3 parts: a) concentration of regeneration ions is high, the fluid can be re-used as regeneration fluid b) concentration is too low for immediate re-use as regeneration fluid but too high to re-use as rinsing fluid, the fluid will be used to make the bulk of over saturated salt solution. c) concentration low, fluid will be re-used as rinsing fluid.

This regeneration method leads to a lower total regeneration volume and therefore chemical consumption. In some occasions the volume can even be lower than the resin bed volume that needs to be regenerated.

When leaving the separator, the resin may be collected in the regeneration vessel, the volume of the collected resin being no larger than the volume of the reactor, preferably no larger than 0.1 times the volume of the reactor, most preferably no larger than 0.05 times the volume of the reactor. In the current available designs the regeneration vessel is in volume 0,75% of the contactor volume.

## Brief description of the drawings

An embodiment of an ion exchange process using plug flow conditions and a comparison with known ion exchange processes will by way of example be explained in detail with reference to the accompanying drawings. In the drawings:

Fig. 1 shows a schematic overview of the process according to the invention,
Fig. 2 shows a schematic lay-out of an apparatus for carrying out the process of the present invention,
Fig. 3 shows a calculated ultra violet transmission (UVT) with varying resin concentration for water treated in the plug flow ion exchange process of the present invention and for a totally mixed contactor,
Fig. 4 shows a jar test set up for determining the first order reaction constants of different ion exchange processes,
Fig. 5 shows the lay-out of a classic dual-stage MIEX process, and
Fig. 6 shows the lay-out of a high rate MIEX process.

## Detailed description of the invention

Fig. 1 shows a schematic lay-out of a suspended ion exchange process according to the invention, for the treatment of raw water, comprising a plug flow contactor 1, having an inlet 2 for receiving raw water and an outlet 3 connected to a separator 4. A resin storage tank 14 is connected via a resin injection line 15 to the inlet 2. Treated water leaves the contactor 1 via outlet 5. Via a resin outlet 6, the contactor 1 is connected to a regeneration vessel 7. Fresh salt is fed into the regeneration vessel 7 via an inlet 8. Regenerated resin leaves the regeneration vessel 7 via outlet 13 and is stored in the resin storage tank 14. Via an outlet 12, salt from the regeneration vessel 7 is fed into a salt re-use unit 10. From the re-use unit 10, a part of the salt is recycled back into the regeneration vessel 7 via line 9, whereas the non-usable part of the salt is fed to a waste exit line 11.

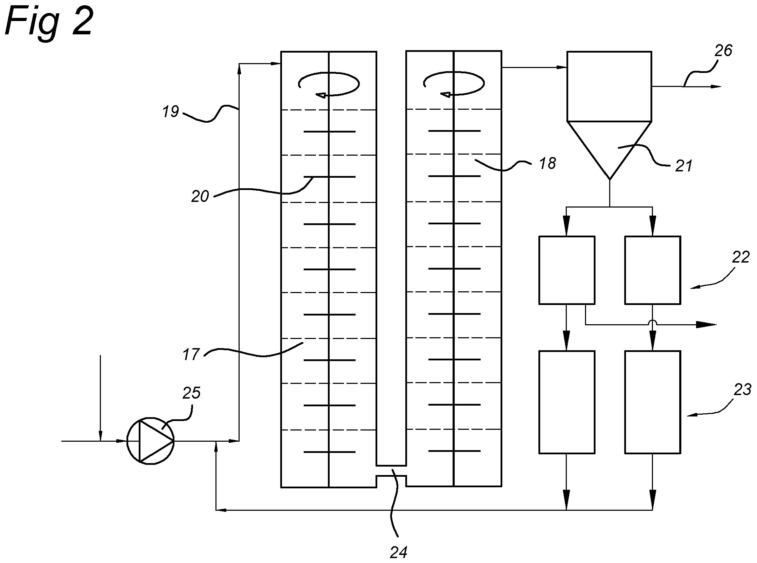

Fig. 2 Shows schematically an apparatus for suspended ion exchange according to the lay-out of figure 1, wherein the contactor 1 is formed by two interconnected cylindrical tanks 17, 18 of a height of for instance 10 m and diameter of for instance 2 m. At the top of the tank 17, the inlet 19 for raw water and resin is situated, to which water is supplied by a feed pump 25. The tanks 17,18 are interconnected via a duct 24 at their lower ends. The tanks 17, 18 each comprise a rotating stack of plate baffles 20 along their longitudinal axis for creating plug flow conditions inside the tanks, in which the resin and the water to be treated travel at substantially the same velocity that is about constant over the cross-section of the cylindrical tanks 17,18. Resin is injected into the inlet 19 from resin storage tanks 23 at a position downstream of the feed pump 25. The treated water and the resin that leave the second tank 18 are separated in plate settler 21. The resin is fed to regeneration vessels 22, whereas the treated water is fed to outlet 26. The regenerated resin is added to fresh resin tanks 23.

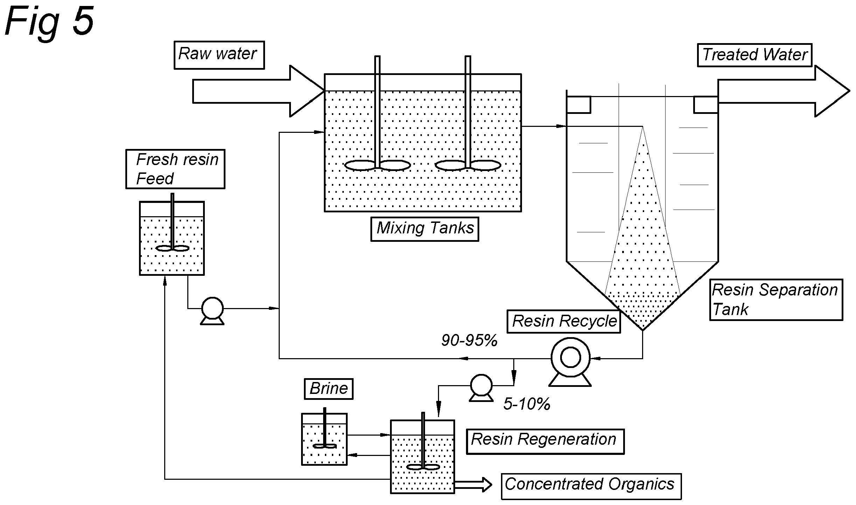

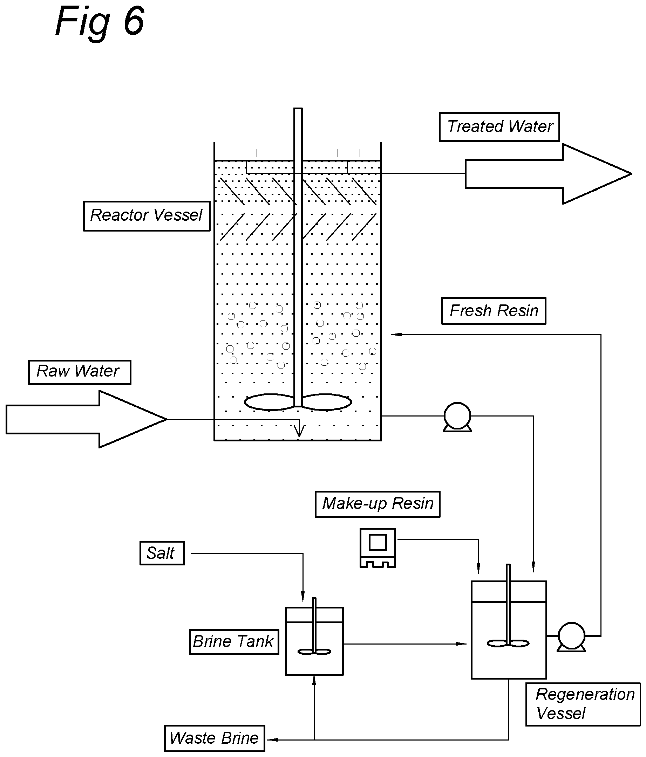

A comparison is made of the kinetics and resin efficiency for the ion exchange process according to the present invention, a dual stage MIEX ion exchange process shown in figure 5, a high rate MIEX process shown in figure 6, a fluidized bed configuration as described in: Cornelissen, E.R., D. Chasseriaud, W.G. Siegers, E.F. Beerendonk, D. van der Kooij (2010), "Effect of anionic fluidized ionexchange (FIX) pre-treatment on nanofiltration (NF) membrane fouling", Water Research 44 3283- 3293, Elsevier and in: Cornelissen E.R., E.F Beerendonk, M.N. Nederlof, J.P van der Hoek, L.P. Wessels (2009) "Fluidised ion exchange (FIX) to control NOM-fouling in Ultrafiltartion, Desalination 236, 334-341 Elsevier and a fixed bed IX process utilized by Dutch water supply utility Vitens.

## Materials and Methods

This ion exchange process is especially developed for the removal of Dissolved Organic Carbon (DOC) from raw surface water. DOC plays an important role in all kind of challenges and problems in almost each water treatment step including water distribution. To remove DOC as a first step within water treatment leads to all kind of benefits. This ion exchange process preferably uses (but is not limited thereto) for this purpose therefore, commercially available strong or weak basic acrylic gel anion exchange resins such as:

Lanxess VPOC 1071
Lanxess A 8071
Lanxess S 5128
DOW Amberlite FPA53
DOW Amberlite FPA55
Purolite A870C

An acrylic gel is preferred because of its resistance against attrition and it's sedimentation properties. This process can also run on all the commercial available MIEX resins.

First order reaction constant k

To compare sorption kinetics and resin efficiency in the different processes, the adsorption process is seen as a pseudo-first order process as in the Lagergren equation. The Lagergren equation can be expressed as:

$$\frac{dq_t}{dt} = k_s(q_{eq} - q_t)$$
<div align="right">Equation 1</div>

Where;

$q_t$ = sorption capacity at time t
$q_{eq}$ = sorption capacity at equilibrium
$k_s$ = pseudo-first order rate constant (min$^{-1}$)

Since there is a linear relationship between the concentration of Dissolved Organic Compounds (DOC) and the transmission of Ultra Violet light (UVT) in the water to be treated,
for 70 % < $UVT_{254}$ < 100 %, the UVT measurements can be used as a substitute for DOC when integrating Equation 1. When integrating equation 1 for the batch reactor (jar test experiment) the equation can be integrated to solve for $k_s$:

$$k_s = \frac{1}{t} \cdot \ln\left(\frac{UVT_o - UVT_{eq}}{UVT_t - UVT_{eq}}\right)$$
<div align="right">Equation 2</div>

Where;

$UVT_{eq}$ = UVT at equilibrium
$UVT_t$ = UVT at time t
$UVT_o$ = Initial UVT of the raw water
t = time (min)
$k_s$ = pseudo-first order rate constant (min$^{-1}$)

To obtain a k-value for each resin concentration, a typical graph is the natural log of the quotient vs. time from

$$k_s = \frac{1}{t} \cdot \ln\left(\frac{UVT_o - UVT_{eq}}{UVT_t - UVT_{eq}}\right)$$

Equation 2. The slope of the linear fit is the k-value for that resin concentration. Calculations demonstrate that there exists a linear relation between $k_s(C)$ and C (where C is resin concentration ml/L, or g/L), as will be shown so that $k_s(C)$ can be normalized as follows:

$$k_s(C) = k_s^1 C$$

Where;
$k_s$' = normalized rate constant
Regarding the pilot simulation from the jar tests, equation1 can be integrated for a continuous complete mixed reactor as follows:

$$\frac{UVT_o - UVT_t}{t * (UVT_1 - UVT_{eq})} = k_s \qquad \text{Equation 3}$$

Where:

$UVT_{eq}$ = UVT at equilibrium
$UVT_t$ = UVT at time t
$UVT_o$ = Initial UVT of the raw water
t = mean residence time (min)
$k_s$ = pseudo-first order rate constant (min$^{-1}$)

The term $q_{eq}$, from equation 1, is sometimes is difficult to measure. One way to determine $q_{eq}$ is to find the best value for $q_{eq}$ by trial and error in a jar test experiment for a given resin concentration. This best value should give the highest correlation with the pseudo first order Lagergren equation.

Jar test apparatus

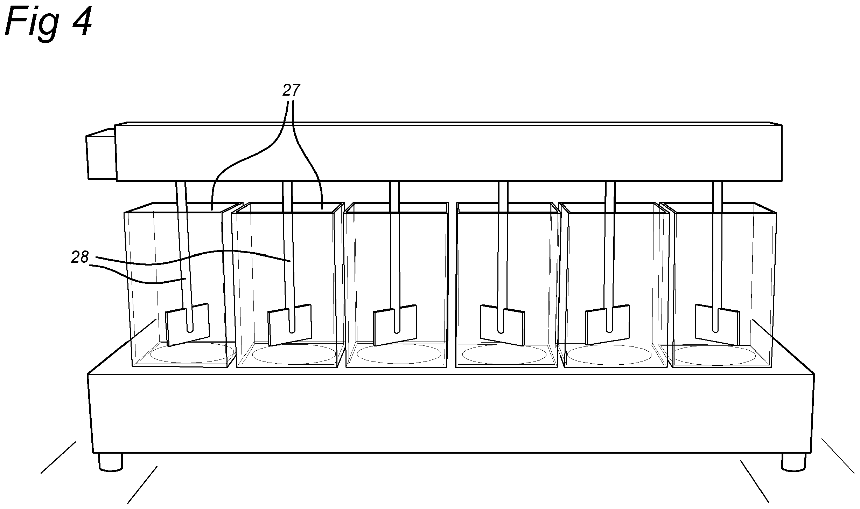

The apparatus that was used for the jar test is a ZR4-6. The apparatus has 6 jars 27, and paddles 28 that can spin at the same or at different speeds at the same time along with cylindrical and rectangular jars. The rpm's can range from 20-900 rpm. The resin that was used for the jar test experiment was MIEX. Both types of jars are clear plastic and can have a maximum volume of 1.5L. An image of the Jar test apparatus can be seen in figure 4.

*Comparing the ion exchange process of the invention with completely mixed contactors in series*

Like mentioned above, the resin in the ion exchange process of the invention travels together with the water through the contactors. The contactor according to the invention resembles 4 - 12 completely mixed contactors in series, almost reaching ideal plug flow. In the known MIEX-process (the only other alternative to treat solutions containing suspended matter) only one or two totally mixed contactors are being used in practice. This means that the contactor hydraulic residence time distribution in the contactor according to the invention is narrower then in the MIEX process.
This means that, in case of a suspension of resin, the difference in contact time between the resin bead that has been in the contactor longest and shortest is smaller in the contactors working under plug-flow conditions according the present invention. This immediately leads to a much higher adsorption rate. In the case of dissolved organic carbon (DOC) removal by an anion resin, DOC removal can be monitored by monitoring the UV-transmission at 254nm (UVT). The higher this transmission, the lower the concentration of DOC. Given a raw water $UVT_o$, a maximum amount to be removed of DOC with this resin corresponding with $UVT_{eq}$, a fixed first order reaction constant k (i.e. depending on the type of resin) and the total amount n of totally mixed contactors in series, the UVT at the effluent can be calculated as follows:

$$UVT_n = \frac{UVT_o}{(1 + k \cdot t/n)^n} + k \cdot \frac{t}{n} \cdot UVT_{eq} \sum_{k=1}^{n} \frac{1}{(1 + k \cdot t/n)^k} \qquad \text{Equation 4}$$

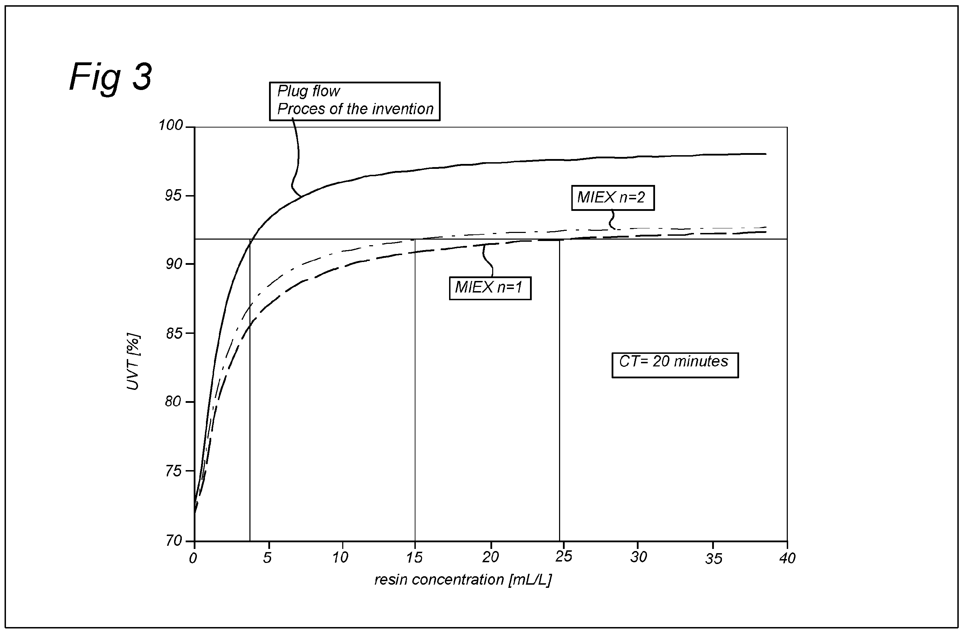

The higher the number n of contactors in series, the higher the effluent $UVT_n$ will become. This is simulated in figure 3 as function of the resin concentration at a fixed average contact time (CT) of 20 minutes. In both cases shown in figure 3 the resin used is MIEX with the same reaction constant k to compare the processes in removal of dissolved organic carbon, measured in an increase in UV-transmission at 254 nm (UVT254). The target level is 92% UVT254. This immediately makes clear that at the same average contact time, determined by the volume of the contactors and the flow, and the same first order reaction constant (k), less resin is necessary to reach the same effluent quality.

*Comparing Bed Volume (BV) of water treated and the impact on the first order reaction constant (k-values)*

Inventory of B V for plug flow ion exchange according to the invention

In the ion exchange process of the invention all resin travels together with the water through the contactors. After resin separation all the resin is regenerated. This means that the overall treated BV till regeneration are low compared to all other ion exchange technology's. Like mentioned earlier for inventive process, the average concentration of resin in the contactors may lie between 4 - 20 mL/L. Since the resin travels with the water through the contactors it can be said that 4 - 20 mL of resin is necessary to treat 1 L of raw water. After that the resin is regenerated. The amount of BV of water treated per BV of resin is then max 1000/4 = 250 and min 1000/20 = 50 BV. Residence time of the resin until regeneration is 10-30 minutes.

Inventory of B V for MIEX

The MIEX process knows several different process set-ups that can be split up into the:

- Classic dual-stage MIEX process;
- High rate MIEX process.

In the classic dual-stage MIEX process, 1 or 2 totally mixed contactors in series are fed with raw water and resin (see figure 5) leading to an average resin concentration of 20 - 40 ml/L of resin in the contactors. 5 - 10% of the sedimentated resin is pumped to a regeneration station, regenerated and added to the 90 -95% recirculated resin. Ideal circumstances (meaning that the 5-10% that is removed has not been regenerated yet) lead to the assumption that the resin will travel 10-20 times through the contactors before it is regenerated. The amount of bed volumes of water treated before regeneration is then max 1000/20 x 20 = 1000 BV and min 1000/50 x 10 = 200 BV. Residence time until regeneration is 300-600 minutes.

In the case of the so called 'high rate' MIEX process the resin concentration in the contactors is 200 - 500 ml/L. The resin stays in the contactor and the water flows through. A small amount of this resin is pumped out to a regeneration vessel (0,1%) and at the same time regenerated resin is pumped into the contactors.

From available literature it is not exactly clear how much resin is pumped to the regeneration system over time. It can only be derived that 0,1% of the total resin inventory is being regenerated without a correlation in time or capacity wise. However in papers of end users and customers its claimed that the so-called effective resin concentration (being based on regenerated resin plus make-up resin, resin loss by attrition) is between 1 - 2,5 ml/L. This gives theoretically a treated bed volume of 1000 - 400 before regeneration and a resin residence time 1000 times higher than the hydraulic residence time, which is not known.

This may explain why the process has been called " high rate" . The hydraulic residence time (and contact time) of the water may be short (not given in literature) compared to the dual-stage but the resin inventory and residence time until regeneration are very large.

Inventory of BV for fluidised bed configurations like FIX

In a fluidised bed configuration without mixing like the FIX process described by Cornelissen e.a., an average of 100ml of resin in a fluidised state is used to treat a liter of raw water at an average contact time of 7 min. This is done for 30 - 60 days until regeneration. This leads to (30x24x60)/7 = 6171 or 12342 liters treated with 100ml of resin. Treated BV are then 60.000 till 120.000 with a resin residence time of 30 -60 days.

Inventory of BV for fixed bed IX processes

The bed volumes treated of a standard fixed bed IX process are very diverse and depend on the water type and used resin. For calculations in comparison an existing anion fixed bed set-up is used from a Dutch water supply utility Vitens to remove colour as a min amount of BV. In Water Treatment Plant Spanneburg approx 3600m3/h of water free of suspended matter is treated with 100m3 of resin with a runtime of 14 days. This leads to 3600x24x14/100 = 12000BV.

With this data the pseudo first order reaction constants are determined using jar tests. First, of all the resin has been loaded with the estimated amount of BV with the same raw water (in this case raw IJssel Lake water). After that certain amount of this resin (i.e. 2,4, 8, 12 and 30 ml/L) of this resin are put in to jars and where regularly sampled to determine UVT at various time intervals, ranging from 2 to 30 minutes. From the occurred reaction K reaction values as a function of the resin concentration where determined for the removal of DOC or as mentioned here above for obtaining an increase in UV Transmittance. The type of resin used was MIEX.

Table 1 gives the overall inventory of the different processes.

|  |  | Invention | MIEX classic | MIEX high-rate | FIX | Column |
|---|---|---|---|---|---|---|
| BV |  |  |  |  |  |  |
|  | Min | 50 | 200 | 2000 | 60000 | 12000 |

(continued)

|  | Invention | MIEX classic | MIEX high-rate | FIX | Column |
|---|---|---|---|---|---|
| Max | 250 | 1000 | 5000 | 120000 |  |
| Residence time resin |  |  |  |  |  |
| Min (min) | 10 | 300 | >3000 | >4000 | >20000 |
| Max (max) | 30 | 600 |  |  |  |
| Average K-value | 0.0419 | 0.0252 | <0.0041 | N calc | N calc |

The loss of this K-value between the plug flow ion exchange process of the invention and MIEX classic at almost the same BV treated immediately confirms that resin blinding occurs on this resin with this feed water at longer resin residence times. Extending the BV and residence time in the case of treating IJssel Lake water leads to a significant loss of adsorption capacity, i.e. lower $k_s$ and $UVT_{eq}$, due to resin exhaustion and inadequate regeneration. As a consequence, fluidized beds like FIX and fixed bed columns are technical not feasible for treating this type of water.

## Claims

1. Method of removing dissolved organic carbons from raw water, containing suspended and/or colloidal matter in a suspended ion exchange process, comprising the steps of:

   - feeding the water into a plug flow reactor at a rate of at least 500m$^3$/h preferably at least 1000m$^3$/h,
   - adding an anion exchange material to the liquid at the inlet of the reactor,
   - suspending the anion exchange material in the water,
   - transporting the water and the suspended anion exchange material under plug flow conditions to an outlet of the reactor after a predetermined residence time, such that the residence time of the resin in the reactor is kept about equal to the residence time of the water to be treated,
   - feeding treated water and anion exchange material from a reactor outlet to a separator, and
   - feeding the separated anion exchange material from the separator to a regeneration vessel after passing no more than 2 times through the reactor, preferably no more than 1 time,

   wherein

   - the concentration of the anion exchange material in the reactor is smaller than 20 ml/l, and
   - the residence time of the anion exchange material in the reactor is lower than 30 minutes.

2. Method according to claim 1, wherein a regenerating substance, such as NaCl, is fed into the regenerator vessel, at a concentration of between 10 and 70 g/L.

3. Method according to claim 2, wherein the concentration of the regenerating substance and the residence time of the resin in the regenerator vessel is substantially constant such that the degree of regeneration of the resin that is fed from the regenerator is substantially constant.

4. Method according to any of the preceding claims, wherein the resin after the separator is collected in a regeneration vessel, the volume of the collected resin being no larger than the volume of the reactor, preferably no larger than 0.1 times the volume of the reactor, most preferably no larger than 0.05 times the volume of the reactor.

## Patentansprüche

1. Verfahren zum Entfernen gelöster organischer Kohlenstoffe aus suspendierte und/oder kolloidale Materie enthaltendem Rohwasser in einem suspendierten Ionenaustauschprozess, umfassend die Schritte von:

   - Zuführen des Wassers in einen Pfropfenströmungsreaktor mit einer Rate von mindestens 500 m$^3$/h, bevorzugt mindestens 1000 m$^3$/h
   - Zugabe eines Anionenaustauschmaterials zu der Flüssigkeit an dem Einlass des Reaktors,
   - Suspendieren des Anionenaustauschmaterials in dem Wasser,

- Transportieren des Wassers und des suspendierten Anionenaustauschmaterials unter Pfropfenströmungsbedingungen zu einem Auslass des Reaktors nach einer vorbestimmten Verweildauer, so dass die Verweildauer des Harzes in dem Reaktor ungefähr gleich der Verweildauer des zu behandelnden Wassers gehalten wird,
- Zuführen von behandeltem Wasser und Anionenaustauschmaterial von einem Reaktorauslass zu einem Abscheider, und
- Zuführen des abgeschiedenen Anionenaustauschmaterials aus dem Abscheider zu einem Regenerationsbehälter nach nicht mehr als zweimaligem Passieren durch den Reaktor, bevorzugt nicht mehr als einmal,

wobei

- die Konzentration des Anionenaustauschmaterials in dem Reaktor kleiner als 20 ml/l ist, und
- die Verweildauer des Anionenaustauschmaterials in dem Reaktor weniger als 30 Minuten ist.

2. Verfahren nach Anspruch 1, wobei eine regenerierende Substanz, wie NaCl, dem Regenerationsbehälter mit einer Konzentration zwischen 10 und 70 g/L zugeführt wird.

3. Verfahren nach Anspruch 2, wobei die Konzentration der regenerierenden Substanz und die Verweildauer des Harzes in dem Regenerationsbehälter im Wesentlichen konstant ist, so dass der Regenerationsgrad des Harzes, das von dem Regenerator zugeführt wird, im Wesentlichen konstant ist.

4. Verfahren nach einem der vorhergehenden Ansprüche, wobei das Harz nach dem Abscheider in einem Regenerationsbehälter gesammelt wird, wobei das Volumen des gesammelten Harzes nicht mehr als das Reaktorvolumen beträgt, bevorzugt nicht mehr als das 0,1-fache des Reaktorvolumens, bevorzugt nicht mehr als das 0,05-fache des Reaktorvolumens.

## Revendications

1. Procédé d'élimination des carbones organiques dissous dans l'eau brute, contenant de la matière en suspension et/ou colloïdale dans un processus d'échange d'ions en suspension, comprenant les étapes suivantes:

- l'amenée de l'eau dans un réacteur à écoulement piston à une vitesse d'au moins 500 m$^3$/h, de préférence au moins 1000 m$^3$/h,
- l'ajout d'un matériau échangeur d'anions dans le liquide à l'entrée du réacteur,
- la mise en suspension du matériau échangeur d'anions dans l'eau,
- le transport de l'eau et du matériau échangeur d'anions en suspension dans des conditions d'écoulement piston à une sortie du réacteur après une durée de séjour prédéterminée, de façon que la durée de résidence de la résine dans le réacteur soit maintenue pendant une durée à peu près égale à la durée de séjour de l'eau à traiter,
- l'amenée de l'eau traitée et du matériau échangeur d'anions de la sortie du réacteur à un séparateur, et
- l'amenée du matériau échangeur d'anions séparé du séparateur à un récipient de régénération après pas plus de deux passages dans le réacteur, de préférence pas plus de 1 passage,

procédé dans lequel:

- la concentration du matériau échangeur d'anions dans le réacteur est inférieure à 20 ml/l, et
- le temps de séjour du matériau échangeur d'anions dans le réacteur est inférieur à 30 minutes.

2. Procédé selon la revendication 1, dans lequel une substance régénérante, tel que NaCl, est introduite dans le récipient de régénération, en une concentration comprise entre 10 et 70 g/L.

3. Procédé selon la revendication 2, dans lequel la concentration de la substance régénérante et le temps de séjour de la résine dans le récipient de régénération est sensiblement constant, de telle sorte que le taux de régénération de la résine qui est introduite dans le régénérateur est sensiblement constant.

4. Procédé selon l'une quelconque des revendications précédentes, dans lequel la résine après le séparateur est recueillie dans un récipient de régénération, le volume de la résine collectée n'étant pas plus grand que le volume du réacteur, de préférence pas supérieure à 0,1 fois le volume du réacteur, plus préférablement pas supérieure à 0,05 fois le volume du réacteur.

Fig 1

Fig 2

Fig 3

EP 2 850 034 B1

Fig 4

EP 2 850 034 B1

**Fig 5**

Raw water

Treated Water

Fresh resin Feed

Mixing Tanks

Resin Separation Tank

Resin Recycle

90-95%

Brine

5-10%

Resin Regeneration

Concentrated Organics

# Fig 6

Treated Water

Reactor Vessel

Fresh Resin

Raw Water

Make-up Resin

Salt

Brine Tank

Regeneration Vessel

Waste Brine

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050173348 A

- GB 1436547 A

**Non-patent literature cited in the description**

- Effect of anionic fluidized ionexchange (FIX) pre-treatment on nanofiltration (NF) membrane fouling. **CORNELISSEN, E.R. ; D. CHASSERIAUD ; W.G. SIEGERS ; E.F. BEERENDONK ; D. VAN DER KOOIJ.** Water Research. Elsevier, 2010, vol. 44, 3283-3293
- Fluidised ion exchange (FIX) to control NOM-fouling in Ultrafiltartion. **CORNELISSEN E.R. ; E.F BEERENDONK ; M.N. NEDERLOF ; J.P VAN DER HOEK ; L.P. WESSELS.** Desalination. Elsevier, 2009, vol. 236, 334-341

- **WACHINISKI, A. M.** Ion Exchange: Treatment for Water. American Water Works Association, 2006
- **RAMASWAMY H.S. ; ABDELRAHIM K.A. ; SIMPSON B.K. ; SMITH J.P.** Residence time distribution (RTD) in aseptic processing of particulate foods: a review. *Food Research International,* 1995, vol. 28 (3), 291-310